Europäisches Patentamt

European Patent Office

Office européen des brevets

(11) Publication number: **0 454 377 A1**

# EUROPEAN PATENT APPLICATION

(21) Application number: 91303525.9

(22) Date of filing: 19.04.91

(51) Int. Cl.⁵: **F16J 3/04, B29C 65/74,** **B29C 65/02**

(30) Priority: 27.04.90 GB 9009582

(43) Date of publication of application: **30.10.91 Bulletin 91/44**

(84) Designated Contracting States: **DE GB**

(71) Applicant: **CROSFIELD ELECTRONICS LIMITED** **Wedgewood Way** **Stevenage Hertfordshire SG1 4QN (GB)**

(72) Inventor: **Piggot, Alan** **23 Elmbamk Avenue, Arkley** **Barnet, Hertfordshire EN5 3DU (GB)**

(74) Representative: **Lawrence, Peter Robin Broughton et al** **GILL JENNINGS & EVERY 53-64 Chancery Lane** **London WC2A 1HN (GB)**

(54) **Method of shaping and bonding sheets of plastic material.**

(57)    A method of making a bonded shaped article comprising at least three layers of heat sealable plastics material wherein each layer has first and second faces, the layers are arranged with the first faces (A) of one pair adjacent to each other and the second faces (B) of the next pair adjacent to each other and the article has a first cut edge (4) at which adjacent first faces are bonded and adjacent second faces are unbonded and a second cut edge (5) at which adjacent second faces are bonded and adjacent first faces are unbonded, wherein the method comprises positioning separator material (2,3) at the respective cut edge between faces that are to remain unbonded at that cut edge, and the layers are cut at the respective cut edge by a laser, simultaneously sealing those faces not separated by separator material.

EP 0 454 377 A1

FIG 1

The invention relates to a method of making a bonded shaped article from at least three layers of heat sealable plastics material. The bonding and shaping results in the formation of folds, frequently pleats, and the resultant article can then be used as a component of, for example bellows, garments and articles of furniture.

Bellows are used for a wide range of functions, and each has its own particular requirements according to that function. However, common to all bellows are generally the requirements for a high open:closed length ratio, and for shape retention both when in use and on recompression.

Prior art bellows manufacture tends to be both cumbersome and time consuming. One such method comprises collapsing sheet material into separate folds, and subsequently connecting together the lateral edges of the folded sheet by, for example, stitching, zipping or welding etc. Alternatively, this folding technique can be applied to a pre-formed tube of the same material. Both these techniques are limited in the number of convolutions the bellows can have, and also in the thinness of materials which can be used. In particular, it is difficult satisfactorily to make bellows from very thin material (e.g., below 100µm) and the requirement to use thick material necessarily reduces the open:closed length ratios that can be obtained.

Another way of making the folds would be by separate cutting and glueing processes but this is again difficult and tends to result in the folds being deformed by the presence of a layer of glue or, when the glueing is by fusion of the layers, by a bead of the fused material. The strength of the joins can be weak, and the process can suffer from the same disadvantages as before.

Laser cutting and laser welding techniques are well known both as independent and simultaneous processes. US 4490203 discloses a method of simultaneously forming at least two smaller tubes from a blown-tube by simultaneously slitting and sealing at least two layers of plastic material in contact with each other by use of a laser. Problems with such techniques lie in the fact that when using a multilayer assembly, comprising more than two layers of plastic, there is no way of preventing mass-welding of the separate layers. Therefore, such a technique is unsuitable for bellows manufacture.

In the invention a bonded shaped article is made from at least three layers of heat sealable plastics material wherein each layer has first and second faces, the layers are arranged with the first faces of one pair adjacent to each other and the second faces of the next pair adjacent to each other and the article has a first cut edge at which adjacent first faces are bonded and a second cut edge at which adjacent second faces are bonded, the method comprising

compressing an assembly of the layers in which the layers extend beyond the position that is to become the first cut edge and in which there is separator material between each adjacent pair of second faces around the position that is to become the first cut edge and wherein the layers extend beyond the position that is to become the second cut edge and in which there is separator material between each adjacent pair of first faces around the position that is to become the second cut edge,

cutting the compressed assembly by a laser to form the first cut edge simultaneously heat sealing the adjacent first faces at the first cut edge while leaving the adjacent second faces unbonded at the first cut edge and

cutting the compressed assembly by a laser to form the second cut edge simultaneously heat sealing the adjacent second faces at the second cut edge while leaving the adjacent first faces unbonded at the second cut edge.

The resultant article will have what is, in effect, a bonded fold alternating with an unbonded laminate. The article has the form of a series of pleats with one of the outer edges of the pleats being the first cut edge and the opposite outer edge of the pleats being the second cut edge.

To make such an article the layers in the assembly extend beyond both the position that is to become the first cut edge and the position that is to become the second cut edge and there is separator material between each adjacent pair of second faces around the position that is to become the first cut edge and between each adjacent pair of first faces around the position that is to become the second cut edge. The compressed assembly is cut by a laser to form the first and second cut edges and simultaneously the adjacent first faces at the first cut edge and the adjacent second faces at the second cut edge are bonded, while leaving the adjacent second faces unbonded at the first cut edge and the adjacent first faces unbonded at the second cut edge.

Among the advantages of the present invention are that the method can be performed very easily to provide a very secure bonding at the cut edges and can be applied to a very wide range of thicknesses of materials. In particular, when applied to the production of bellows, it can result in the production in a very simple manner of bellows having an extremely high open:closed length ratio.

There must be at least three layers of the heat sealable plastics material in the article in order that there is at least one pair of first faces to be bonded and at least one pair of second faces to remain unbonded. Generally there are at least 10 and usually at least 20 or more of the layers. The upper limit on the number of layers is set by the ability of the laser to simultaneously cut and bond through the thickness. Frequently there can be up to 100 or even up to 200 layers, or more.

The heat sealable plastics material can be selected from any of the polymeric materials that conventionally are bonded to one another by heat sealing. Preferred materials comprise polyethylene and polypropylene.

As is known, heat sealing properties of polymeric sheet material can be improved by forming the sheet material from a laminate wherein the outer layers of the laminate (which define the first and second faces) are of material that has better heat sealing properties than the remainder of the laminate. For instance a coextruded laminate in which the outer faces are of an appropriate grade of ethylene vinyl acetate can be suitable.

Additives may be incorporated into the plastics material to give different properties, e.g., for bellows for use in a photographic environment an opaque matt black material is desirable having an anti-static quality. A material suitable for such a use is carbon loaded low density polyethylene.

The layers must have the appropriate combination of flexibility and stiffness that is required for the ultimate use. Each layer can be very thin, for instance below 100μm and possibly as low as 50μm or less, but if each layer is too thin then the physical properties of the final article may be inadequate. Generally therefore each layer is at least 50μm thick, and in many instances it is greater. Thus the invention can easily be applied to layers having a thickness of up to, for instance, 300μm and often up to 600μm. In theory, even greater thicknesses can be used if the number of layers and the power of the laser used are appropriate, or if more than one laser is used. Typically a suitable range of laser thickness for use with, e.g., a $CO_2$ laser of 1000W power output, is in the range 50-500μm.

The separator material can be substantially any non-heat-sealable material which can be used in low thickness, in order to keep the total thickness of the assembled stack as small as possible. The separator should not produce a dust product during the cutting since this may be capable of contaminating the molten material along the weld as laser cutting takes place. In addition it is preferred to be able to remove the separator material after the cutting and bonding step.

Preferably the separator material is a sheet material, generally a paper material, which is preferably coated to satisfy the above requirements. More preferably the separator is silicone-coated paper. The thickness of the sheet material is preferably as low as is convenient to handle, and in particular is preferably not more than the thickness of the individual layers of polymeric material. Typically the thickness is in the range 30 to 200μm, often around 50μm.

Alternatively, the separator may comprise a coating on the surface of the heat-sealable layers, which may be removed after cutting by washing with an appropriate solvent which is not detrimental to the bellows.

The separator material must be provided, between the appropriate faces, around the position that is to be cut by the laser. In particular, it must be located at the precise position where the laser cut will be formed and must extend sufficiently far on the side of that position that is to remain part of the article (and generally on both sides of that position) to prevent bonding of the adjacent faces. For instance it should generally, but not necessarily, extend for at least 5mm on each side of the line where the cut edge is to be formed by the laser.

The assembly of the layers and separator material must be compressed, for instance by being firmly clamped, to remove sandwiched air so as to promote the contact of the faces where welding is to occur, and to prevent laser scatter as it passes through the assembly of layers.

The laser to be used must be capable of high-precision cutting and, at the same time, welding together separate layers of heat-sealable material by a melting action. The power of the laser must be such that it can be applied to the multilayer assembly to give a sharply focussed cutting and welding action throughout the assembly. Typically a $CO_2$ laser can be used using a pulsed/constant wave beam to create the best cutting conditions, pulsing giving rapid penetration and constant wave beam giving profile cutting.

The articles made by the invention preferably have a pleated configuration and the strength of the pleats (that is to say the strength of the bonds at each pleat) can be extremely strong. Accordingly the invention can be applied to the production of a wide variety of pleated materials such as garments, sports goods, articles of furniture and so forth, but is of particular value when applied to the production of bellows. The bellows can be made of a wide variety of lengths, weights, and radii, and the bellows can also be made in a wide variety of profiles or shapes.

Particularly preferred bellows made according to the invention have a very high open/closed length ratio and are formed of thin polymeric material that is preferably filled with carbon so as to make it optically dense. Such bellows can be used to define a draught-free duct through which a laser beam can be directed with no risk of it being deflected by variations in refractive index due to changes in temperature along its path. In the absence of such bellows air moving through the optical path is liable to cause variations in refractive index thereby deflecting the beam, and in some instances deflections of even 1μm are unacceptable. By surrounding the laser beam with bellows, movement of air through the optical path is minimised and the temperature throughout the optical path is held more constant.

A system in which this is of particular value is an internal drum scanner, wherein the laser beam passes axially along the interior of the cylinder and is deflected by a spinner to image a film positioned around the drum interior. The bellows can connect between the end wall of the cylinder and the optical bench which carries the spinner and which moves along the cylinder axis.

The invention is now illustrated in more detail with reference to the following drawings, which demonstrate, by way of example, the production of bellows for such a purpose.

Figure 1 shows a perspective exploded view from one side of the assembly stacking arrangement for producing bellows;

Figure 2 shows a sectional view of the finished bellows with the separator interleaves still in place prior to their removal.

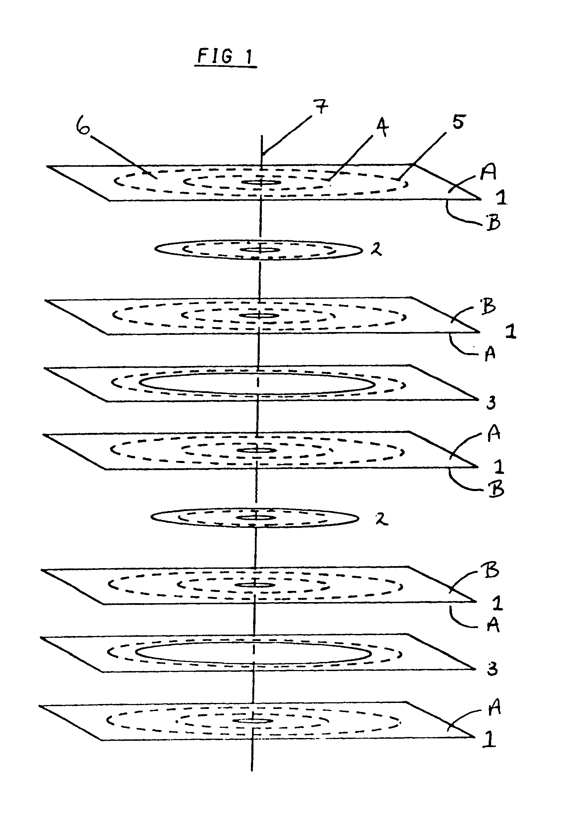

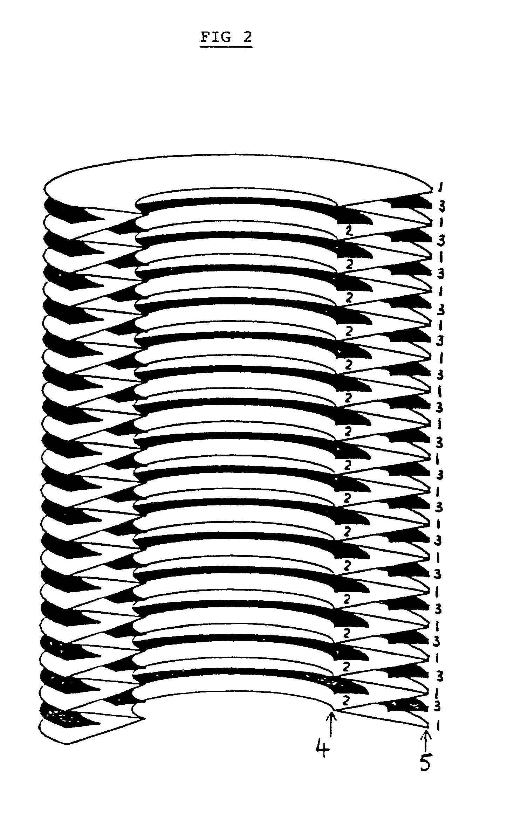

In both Figures 1 and 2, 1 is the bellows material e.g. polyethylene, and 2 and 3 are the separator material e.g. silicone-coated paper.

In Figure 1 the laser cutting lines, giving rise to first and second cut edges of the bellows respectively, are shown as 4 and 5. The distance between the first and second cut edges, i.e., between the cutting lines 4 and 5, defines the radial width of the bellows 6. 7 is an axis line and a mandrel can be provided along the axis to facilitate forming and clamping the assembly.

Each layer 1 has first and second faces, labelled A and B in Figure 1, with the second faces B being adjacent to one another in the laminate formed between the top two films in Figure 1 and the first faces A being adjacent to one another in the laminate formed between the second and third films from the top of Figure 1. During the laser cutting of the first cut edge 4, the separator 2 prevents laser bonding of the second faces B but bonding does occur between adjacent faces A. During the laser cutting of the second edge 5, the separator 3 prevents laser bonding of the adjacent first faces A but laser bonding does occur between adjacent second faces B.

It will be seen that the separator layers 2 extend around the position of the cut edge 4 and, in particular, extend inwardly towards the axis 7, and so this inwardly extending part of the separator is cut during the laser cutting. Similarly, the separator 3 extends outwardly beyond the position of the second cut edge and this outwardly extending part of the separator is cut during the laser cutting.

There should be a radial gap between the outer diameter of 2 and the hole in 3; this gap should be as large as can be tolerated in order to make the separator rings as radially loose as possible. This helps in their subsequent removal when cutting is completed and the bellows extended, as described below.

In Figure 2 the separator layers 2 and 3 are shaded to help distinguish them from the bellows layer In practice when the bellows are expanded the separator rings fall sideways. Closing the bellows brings the semi-released separator rings together, and they can then be easily pulled away.

The following example also serves to illustrate the present invention and shows the production of bellows suitable for providing a duct through which a laser beam can be passed and that prevents air currents deflecting the laser beam.

## Example

A multilayer assembly is constructed as shown in the drawings, comprising 102 layers of highly opaque matt black carbon-loaded linear low density polyethylene. Each layer has a thickness of $100\mu m$, and is interleaved with silicone-coated paper having a thickness of around $50\mu m$ as the separator material. The total stack height is around 13mm. The stack is firmly clamped and cut using a $CO_2$ laser at 1000W power output and a profiling speed of 700mm per minute. Manual focussing and pulsed/constant wave beam are used to create optimum cutting conditions. A change of clamping is necessary between cutting the inner and outer profiles of the bellows.

The resultant finished bellows has 50 operational convolutions, with an outer diameter of 124 mm and an inner diameter of 65mm. The bellows can collapse to less than 12mm and extend to over 1400 mm. The weight of the bellows is about 80g.

## Claims

1. A method of making a bonded shaped article comprising at least three layers of heat sealable plastics material wherein each layer has first and second faces, the layers are arranged with the first faces (A) of one pair adjacent to each other and the second faces (B) of the next pair adjacent to each other and the article has a first cut edge (4) at which adjacent first faces are bonded and a second cut edge (5) at which adjacent second faces are bonded, the method comprising

   compressing an assembly of the layers wherein the layers extend beyond the position that is to become the first cut edge and in which there is separator material (3) between each adjacent pair of second faces around the position that is to become the first cut edge and wherein the layers extend beyond the position that is to become the second cut edge and in which there is separator material (2) between each adjacent pair of first faces around the position that is to become the second cut edge,

   cutting the compressed assembly by a laser to form the first cut edge simultaneously heat sealing the adjacent first faces at the first cut edge while leaving the adjacent second faces unbonded at the first cut edge and

cutting the compressed assembly by a laser to form the second cut edge simultaneously heat sealing the adjacent second faces at the second cut edge while leaving the adjacent first faces unbonded at the second cut edge.

2. A method according to claim 1 wherein there are at least ten layers of plastics material, usually at least 20, and up to 200 layers of the plastics material.

3. A method according to claim 1 or claim 2 wherein each layer of plastics material has a thickness of at least 15μm and is generally in the range 50 to 500μm.

4. A method according to any preceding claim wherein the plastics material is selected from polyethylene and polypropylene.

5. A method according to any of claims 1 to 3 wherein the plastics material is a sheet material comprising a co-extruded laminate having outer faces comprising ethylene vinyl acetate.

6. A method according to any of the preceding claims wherein the separator material is a non-heat-sealable sheet material comprising a paper material, and is preferably a silicone-coated paper.

7. A method according to any preceding claim wherein the separator material has a thickness in the range 30 to 200μm, generally around 50μm.

8. A method according to any of claims 1 to 5 wherein the separator material comprises a non-heat-sealable coating on the surface of the heat-sealable layer which is removed by washing with solvent.

9. A method according to any preceding claim wherein a $CO_2$ laser is used to cut the plastics material.

10. A bonded article made by a method according to any preceding claim and having a pleated configuration.

11. Use of a bonded article according to claim 10 adapted to define a draft-free duct through which a laser beam is directed.

FIG 1

FIG 2

European Patent
Office

**EUROPEAN SEARCH REPORT**

Application Number

EP 91 30 3525

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A- 856 681 (DUNLOP) * Page 2, lines 83-102 * | 1-3,10 | F 16 J 3/04 B 29 C 65/74 B 29 C 65/02 |
| A | GB-A-1 121 057 (NATIONAL RESEARCH DEVELOPMENT CORP.) * Whole document * | 1-4,9 | |
| A | GB-A-2 031 793 (WINDMÖLLER & HÖLSCHER) * Whole document * | 1-4,9 | |
| A | US-A-3 140 327 (CONTINENTAL GUMMI-WERKE) * Claims 1-7; figures 1,2 * | 1,10 | |
| A | FR-A-2 277 671 (ETABLISSEMENTS DUPRE) * Page 2, line 18 - page 5, line 12 * | 6,7,8 | |

TECHNICAL FIELDS
SEARCHED (Int. Cl.5)

B 29 C
B 29 D
F 16 J

The present search report has been drawn up for all claims

| Place of search | Date of completion of the search | Examiner |
|---|---|---|
| THE HAGUE | 18-07-1991 | SOZZI R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)